# EUROPEAN PATENT SPECIFICATION

(11) **EP 3 590 752 B1**
(45) Date of publication and mention of the grant of the patent: **11.05.2022**
(21) Application number: 18760767.6
(22) Date of filing: 16.02.2018
(51) Int. Cl.: B60K 35/00, G02B 27/01, G09G 5/10

(54) **HEAD-UP DISPLAY DEVICE AND ONBOARD DISPLAY SYSTEM**
HEAD-UP-ANZEIGEVORRICHTUNG UND BORDSEITIGES ANZEIGESYSTEM
DISPOSITIF D'AFFICHAGE TÊTE HAUTE ET SYSTÈME D'AFFICHAGE EMBARQUÉ

(30) Priority: 28.02.2017 JP 2017037154
(43) Date of publication of application: 08.01.2020
(73) Proprietor: Nippon Seiki Co., Ltd., Nagaoka-shi, Niigata 940-8580 (JP)
(72) Inventor: UMEZAWA Yukie, Nagaoka, Niigata (JP)
(74) Representative: Carpmaels & Ransford LLP
(86) International application number: PCT/JP2018/005435
(87) International publication number: WO 2018/159319

(56) References cited:
- JP-A- 2005 207 777
- JP-A- 2005 297 810
- JP-A- 2007 079 113
- JP-A- 2008 309 967
- JP-A- 2013 024 948
- JP-A- 2015 101 311
- JP-A- 2016 031 478

## Description

### TECHNICAL FIELD

The present invention relates to a head-up display device and an onboard display system.

### BACKGROUND ART

Conventionally, a head-up display (HUD) device displaying information on a projection member such as a windshield has been known. For example, a HUD device described in Patent Document 1 displays a first virtual image along a road surface which is an actual scene and a second virtual image which is perpendicular to the road surface as viewed from a viewer (for example, a driver).

Further, for example, a HUD device described in Patent Document 2 includes an optical sensor for detecting a luminance of external light, and adjusts a luminance of a virtual image based on a detection result of the optical sensor.

### PRIOR ART DOCUMENT

### PATENT DOCUMENT

Patent Document 1: Japanese Unexamined Patent Application Publication No. 2008-257021
Patent Document 2: Japanese Unexamined Patent Application Publication No. 2011-112654
Patent Document 3: Japanese Patent Application Publication No. 2016-031478 discloses a head-up display device comprising a control circuit that controls the luminance of the light source by using a result of the measurement by the illuminance sensor.
Patent Document 4: Japanese Patent Application Publication No. 2015-101311 discloses a first display means which generates a superimposition image for a specific object. A display controller changes the superimposition image to an alternative image being a different display image on the basis of the behavior of the own vehicle.
Patent Document 5: Japanese Patent Application Publication No. 2005-207777 discloses an external environment condition judging device. In the case that the external environment is judged to be dark, a display mode of facility-related images is changed to display them on an image display. At this time, the facility-related images are displayed in such a way that they may be superimposed and seen on an actual scenery.

### SUMMARY OF THE INVENTION

### PROBLEMS TO BE SOLVED BY THE INVENTION

Based on Patent Documents 1 and 2 described above, it is conceivable that first virtual image and the second virtual image are adjusted to the same luminance in accordance with the detection result of the optical sensor. Here, the first virtual image associated with the actual scene is more susceptible to an influence of a change in brightness outside the vehicle than the second virtual image. Therefore, for example, when the outside of the vehicle becomes bright, the luminance of the first virtual image with respect to the brightness outside the vehicle may be insufficient, and visual appeal of the first virtual image may be low.

The present invention has been made in view of the above circumstances, and an object of the present invention is to provide a head-up display device and an onboard display system which improve visual appeal of a virtual image associated with an actual scene among a plurality of virtual images.

### SOLUTION TO PROBLEM

A head-up display device according to a first aspect of a present invention for achieving the object is a head-up display device for displaying a first virtual image associated with an actual scene and a second virtual image not associated with the actual scene, the head-up display device including a control unit configured to set a luminance of the first virtual image higher than a luminance of the second virtual image by a luminance difference, and set the luminance difference to increase as a light control value determined based on an intensity of external light increases.

An onboard display system according to a second aspect of a present invention for achieving the object includes the above head-up display device and a display device configured to emit a light in a set light emission luminance, and the display device changes the light emission luminance according to a change in the luminance of the second virtual image.

### EFFECT OF THE INVENTION

According to the present invention, it is possible to provide a head-up display device and an onboard display system which improve visual appeal of a virtual image associated with an actual scene among a plurality of virtual images.

### BRIEF DESCRIPTION OF THE DRAWINGS

Fig. 1A is a schematic diagram showing a configuration of a vehicle on which a HUD device is mounted according to an embodiment of the present invention, and Fig. 1B is a schematic diagram showing a configuration of the HUD device.
Fig. 2 is a graph showing the relationship between a luminance and a light control value according to the embodiment of the present invention.
Fig. 3 is a flowchart showing a processing procedure of a light control unit of a HUD control unit according to the embodiment of the present invention.
Fig. 4 is a schematic view showing a configuration of an onboard display system, as viewed from a driver's seat, according to the embodiment of the present invention.

### MODE FOR CARRYING OUT THE INVENTION

Hereinafter, an onboard display system with a head-up display device (hereinafter referred to as HUD device) according to an embodiment of the present invention will be described with reference to the accompanying drawings.

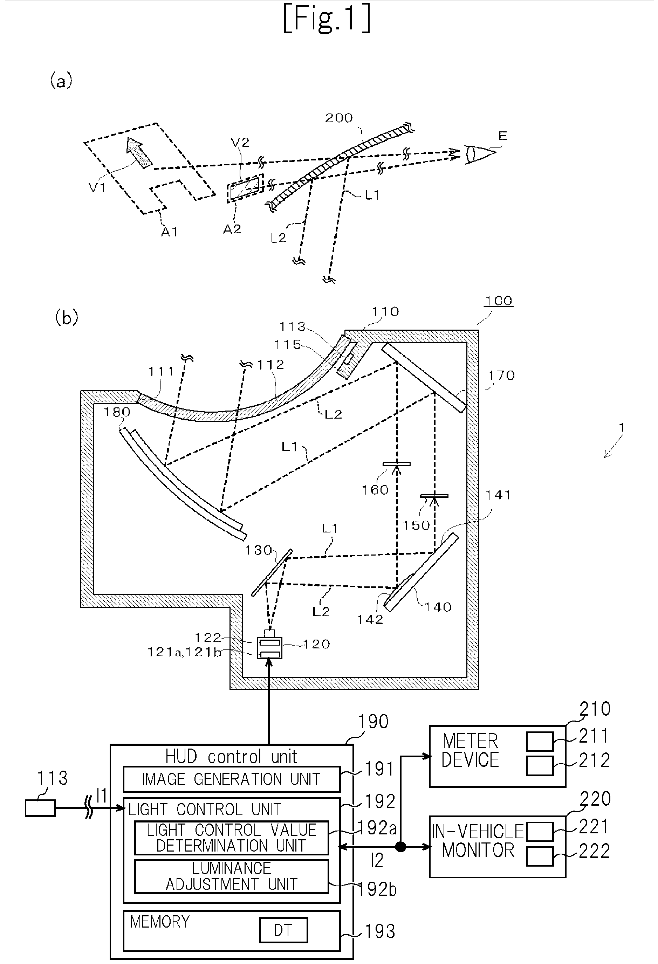

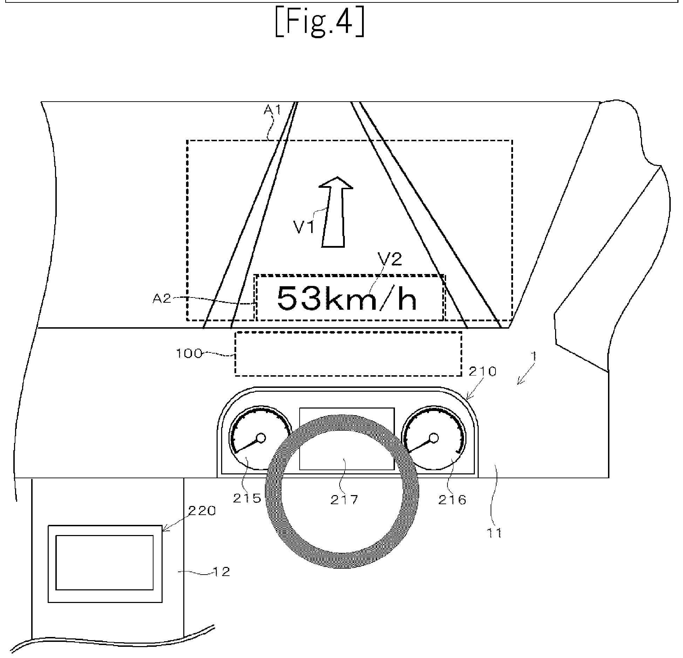

An onboard display system 1 according to the present embodiment includes a HUD device 100, a meter device 210, and an in-vehicle monitor 220, as shown in Fig. 1B and Fig. 4.

The HUD device 100 is mounted on a dashboard of a vehicle. As shown in Figs. 1A and 1B, the HUD device 100 generates display light L1 and display light L2, and irradiates a windshield 200 with the display light L1 and the display light L2. A viewer (mainly a driver E) receives the display light L1 and the display light L2 reflected on the windshield 200, and can visually recognize a first virtual image V1 formed by the display light L1 and a second virtual image V2 formed by the display light L2.

The first virtual image V1 is displayed in a first display area A1 which is located far from the driver E and extends in a substantially horizontal direction along a road surface. The first display area A1 is formed in a concave shape in which an opening portion faces downward as viewed from the driver E. For example, the HUD device 100 provides navigation information to the driver by displaying an arrow along the road surface as the first virtual image V1 in the first display area A1. The first virtual image V1 refers to a virtual image associated with an actual scene and includes, for example, characters, figures or symbols displayed along the road surface or selection symbols for selecting objects such as front vehicles.

The second virtual image V2 is displayed in a second display area A2 which is located closer to the driver E than the first display area A1 as viewed from the driver E and extends in a direction perpendicular to the line of sight of the driver E. The second display area A2 is formed to form a rectangle corresponding to the opening portion of the first display area A1. For example, the HUD device 100 displays vehicle information such as a vehicle speed as the second virtual image V2 in the second display area A2. The second virtual image V2 refers to a virtual image that is not associated with the actual scene and displays information by, for example, characters, figures or symbols.

The HUD device 100 includes a housing 110, an indicator 120, a fold mirror 130, an imaging position adjustment mirror 140, a first screen 150, a second screen 160, a plane mirror 170, a concave mirror 180, a HUD control unit 190, and an external light detector 113, as shown in Fig. 1B.

The housing 110 is formed, for example, in a box shape with a light shielding synthetic resin. Each of components of the HUD device 100 is contained in the internal space of the housing 110. An opening 111 for passing the display light L1 and the display light L2 is provided in a part of a peripheral wall of the housing 110. The opening 111 is covered with a translucent cover 112.

The indicator 120 displays a display image corresponding to the virtual images V1 and V2 under the control by the HUD control unit 190, and emits the display light L1 and the display light L2 from the display image. For example, the indicator 120 includes light sources 121a and 121b, and a display element 122 that receives light from the light sources 121a and 121b and generates a display image. The light source 121a emits light for lighting the first virtual image V1, and the light source 121b emits light for lighting the second virtual image V2. The display element 122 is a transmissive display element such as a thin film transistor (TFT) liquid crystal panel or a reflective display element such as a digital micro mirror device (DMD).

The fold mirror 130 includes a substrate having a flat-plate shape and made of synthetic resin or glass, and a metallic reflective film formed on one surface of the substrate. The fold mirror 130 reflects the display light L1 and the display light L2 emitted from the indicator 120 toward the imaging position adjustment mirror 140.

The imaging position adjustment mirror 140 includes a substrate having a flat-plate shape and made of synthetic resin or glass, and a metallic reflective film formed on one surface of the substrate. The imaging position adjustment mirror 140 is a bifocal mirror having two focal lengths (imaging distances). The imaging position adjustment mirror 140 has a first reflective surface 141 having a flat shape and a second reflective surface 142 having a curved convex shape. These reflecting surfaces 141 and 142 are formed adjacent to each other on the same plane.

The first and second screens 150, 160 are transmissive screens formed of a holographic diffuser, a microlens array, a diffusion plate, and the like. The first and second screens 150, 160 are placed at an imaging position set by the imaging position adjustment mirror 140. The first screen 150 is provided at a position closer to the imaging position adjustment mirror 140 than the second screen 160.

When the display light L1 is incident on one surface side of the first screen 150 (the surface on the side of the imaging position adjustment mirror 140), the first screen 150 displays a display image on the other surface side (the surface on the side of the flat mirror 170), and emits the display light L1 relating to the display image. When the display light L2 is incident on one surface side of the second screen 160 (the surface on the side of the imaging position adjustment mirror 140), the second screen 160 displays a display image on the other surface side (the surface on the side of the flat mirror 170), and emits the display light L2 relating to the display image.

The plane mirror 170 includes a substrate having a flat-plate shape and made of, for example, synthetic resin or glass, and a metallic reflective film formed on one surface of the substrate. The plane mirror 170 reflects the display light L1 from the first screen 150 and the display light L2 from the second screen 160 toward the concave mirror 180.

The concave mirror 180 includes a substrate made of a synthetic resin, glass or the like, and a reflective film of a metal formed on one surface of the substrate. The concave mirror 180 reflects the two display light L1 and display light L2 toward the windshield 200 while expanding the display light L1 and the display light L2. The windshield 200 guides the display light L1 and the display light L2 to an eye box (viewing area) of the driver E. As a result, the driver E can visually recognize the first virtual image V1 and the second virtual image V2.

The external light detector 113 is provided on a light shielding wall 115 facing the cover 112 in the housing 110. The external light detector 113 is formed of, for example, a photodiode. The external light detector 113 detects a light intensity of external light as a detection value I1, and outputs the detection value I1 to the HUD control unit 190 (more precisely, a light control unit 192 described later). The higher the light intensity of the external light is, the larger the detection value I1 is.

The HUD control unit 190 controls the indicator 120. Specifically, the HUD control unit 190 includes an image generation unit 191, the light control unit 192 and a memory 193.

The image generation unit 191 generates image data for displaying an image on the display element 122 of the indicator 120 based on various types of vehicle information acquired from an on-vehicle electronic control unit (ECU) which is not shown.

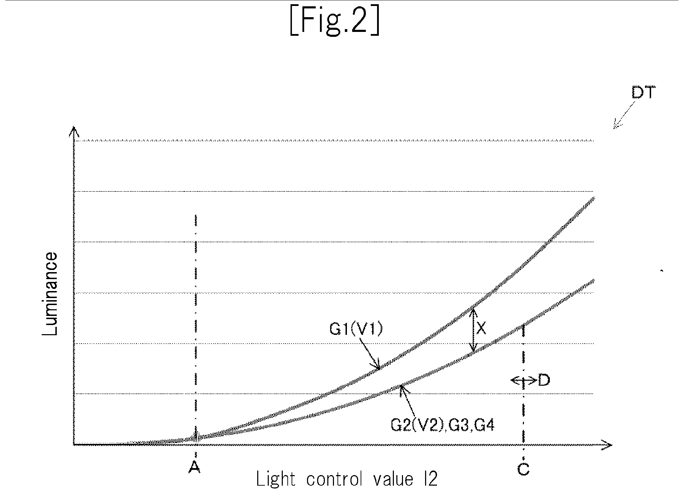

The memory 193 stores in advance a data table DT in which a light control value I2 and a luminance G2 of the second virtual image V2 are associated with each other, and a luminance difference X in accordance with the light control value 12, as shown graphically in Fig. 2. The luminance G2 in the data table DT is, for example, a value obtained by performing gamma correction with a gamma value of 2.2 on the light control value 12.

The light control unit 192 includes a light control value determination unit 192a that determines the light control value I2 based on the detection value I1 detected by the external light detector 113, and a luminance adjustment unit 192b that adjusts light emission intensities of the light sources 121a and 121b of the indicator 120 based on the light control value I2 determined by the light control value determination unit 192a with reference to the data table DT, and as a result, adjusts a luminance G1 of first virtual image V1 and the luminance G2 of second virtual image V2. The light control value determination unit 192b outputs the determined light control value I2 to the meter device 210 (more precisely, a light source control unit 212 described later) and the in-vehicle monitor 220 (more precisely, a light source control unit 222 described later). It is noted that the light control value determination unit 192a may be provided on the outside of the HUD control unit 190 (vehicle side). Also, the detection value I1 detected by the external light detector 113 may be used as it is as the light control value 12, and in this case, the light control value determination unit 192a may be omitted.

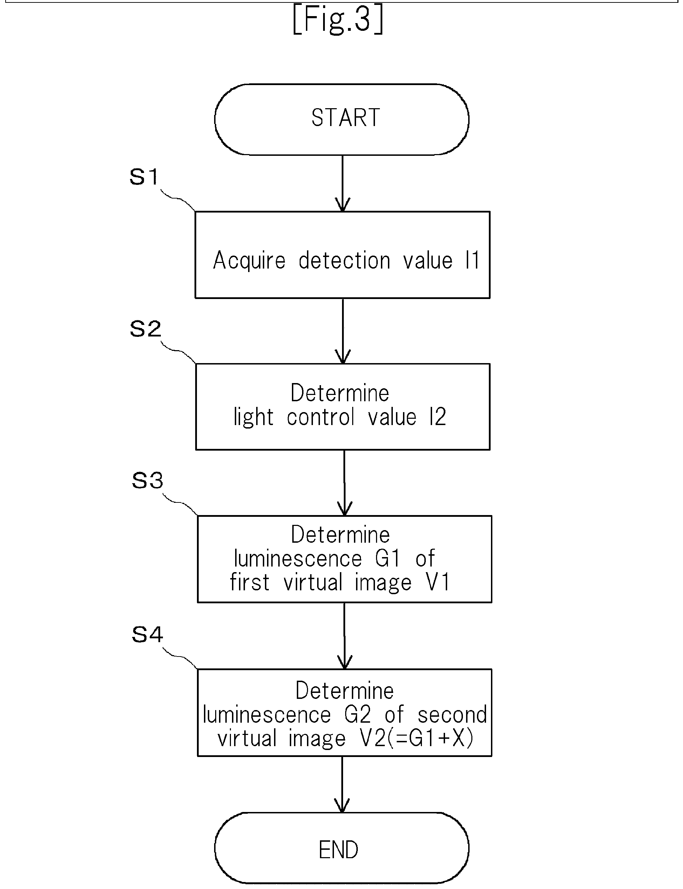

A procedure of light adjustment processing of the light control unit 192 will be described with reference to the flowchart of Fig. 3. The flowchart is repeatedly executed when the HUD device 100 is powered on.

First, the light control unit 192 (light control value determination unit 192a) acquires the detection value I1 detected by the external light detector 113 (step S1), and determines the light control value I2 based on the acquired detection value I1 (step S2). The light control value I2 is set to a value proportional to the detection value I1. The step S2 corresponds to a light control value determination process.

Next, with reference to the data table DT stored in the memory 193 and shown in Fig. 2, the light control unit 192 (the luminance adjustment unit 192b) determines the luminance G2 of the second virtual image V2 according to the light control value I2 (step S3), and determines the luminance G1 of the first virtual image V1, which is a value obtained by adding the luminance difference X to the luminance G2 with reference to the luminance G2 (step S4). The steps S3 and S4 correspond to a luminance determination process. As described above, the processing according to the flow chart is completed.

In the data table DT, the luminances G1 and G2 are set to gradually increase as the light control value I2 increases. Further, in a region where the light control value I2 exceeds a set value A, the luminance G1 is higher than the luminance G2 by the luminance difference X, and the luminance difference X increases as the light control value I2 increases. Further, when the light control value I2 is equal to or less than the set value A, the luminance difference X is set to zero, that is, the luminances G1 and G2 are set to the same value.

Here, the visual appeal of the first virtual image V1 associated with the actual scene is likely to decrease due to an influence of a brightness of the outside of the vehicle than the second virtual image V2 that is not associated with the actual scene. In the present embodiment, paying attention to this point, the luminance G1 of the first virtual image V1 is set to be higher than the luminance G2 of the second virtual image V2 by the luminance difference X, and the luminance difference X is set to increase as the light control value I2 increases. This prevents the first virtual image V1 from being hard to see when the outside of the vehicle is bright. Thus, the visual appeal of the first virtual image V1 can be improved.

Here, in the display element 122, there is known a phenomenon in which light is transmitted slightly even in a region where light from the light source 121a is not transmitted, so that a background except for the first virtual image V1 in the first area A1 is illuminated. If the luminance G1 of the first virtual image V1 is high in a situation where the surroundings are dark, the background is visually recognized, which may cause a hindrance to driving or the like. In particular, the display angle of view in the first area A1 is close to the field of view during driving and is larger than the display angle of view in the second area A2, and the driving is therefore more likely to be disturbed. To suppress this, when the light control value I2 is equal to or less than the set value A, the luminance G1 is lowered to the same level as that of the luminance G2 so that the light emission of the background is not conspicuous. That is, the set value A is determined on the basis of the ambient brightness at which the light emission of the background light emission is visually recognized.

As shown in Fig. 4, the meter device 210 is mounted on a dashboard 11 and represents vehicle information such as a vehicle speed and an engine rotational speed. The meter device 210 includes analog display units 215 and 216 and a digital display unit 217. The analog display units 215 and 216 each indicate a measurement amount by rotating a pointer with respect to the scale. The digital display unit 217 is formed of an organic electro-luminance (EL) panel, a liquid crystal panel, or the like.

As shown in Fig. 1B, the meter device 210 includes a backlight light source 211 that causes the meter device 210 to emit light, and the light source control unit 212 that adjusts a light emission luminance G3 of the meter device 210 by adjusting the output of the backlight light source 211.

The light source control unit 212 is configured to be capable of communicating with the HUD control unit 190, and acquires the light control value I2 from the HUD control unit 190 (the light control value determination unit 192a). The light source control unit 212 sets the output of the backlight light source 211 in accordance with the acquired light control value 12. Thus, as shown in Fig. 2, the meter device 210 changes the light emission luminance G3 such that the light emission luminance G3 changes in conjunction with the luminance G2 of the second virtual image V2.

The in-vehicle monitor 220 is mounted on a center console 12 as shown in Fig. 4. The in-vehicle monitor 220 is formed of an organic EL panel, a liquid crystal panel and the like, and displays map information and the like.

The in-vehicle monitor 220 includes a backlight light source 221 that causes the in-vehicle monitor 220 to emit light, and a light source control unit 222 that adjusts a light emission luminance G4 of the in-vehicle monitor 220 by adjusting the output of the backlight light source 221, as shown in Fig. 1B.

The light source control unit 222 is configured to be capable of communicating with the HUD control unit 190, and acquires the light control value I2 from the HUD control unit 190 (the light control value determination unit 192a). The light source control unit 222 sets the output of the backlight light source 221 in accordance with the acquired light control value 12. Thus, as shown in Fig. 2, the in-vehicle monitor 220 changes the light emission luminance G4 such that the light emission luminance G4 changes in conjunction with the luminance G2 of the second virtual image V2. Thus, in the onboard display system 1, the in-vehicle monitor 220, the meter device 210 and the second virtual image V2 of the HUD device 100, which are placed adjacent to one another, are synchronized to one another, to change the luminances G2, G3 and G4. It is noted that the meter device 210 and the in-vehicle monitor 220 correspond to the display device.

### (Effect)

According to the embodiment described above, the following advantages can be achieved.

(1) The HUD device 100 displays the first virtual image V1 associated with the actual scene and the second virtual image V2 that is not associated with actual scene. The HUD device 100 includes the HUD control unit 190 which sets the luminance G1 of the first virtual image V1 to be higher than the luminance G2 of the second virtual image V2 by the luminance difference X, and sets the luminance difference X to increase as the light control value I2 determined based on the intensity of the external light increases. According to this configuration, in the case where the surroundings are bright, the luminance G1 of the first virtual image V1 is set to be higher than the luminance G2 of the second virtual image V2 by the luminance difference X according to the brightness. This allows improvement of the visual appeal of the first virtual image V1 in the case where the surroundings are bright.

(2) When the light control value I2 is equal to or less than the set value A, the HUD control unit 190 sets the luminance difference X to zero, so that the luminance G1 of the first virtual image V1 and the luminance G2 of the second virtual image V2 are set to be identical to each other.
Here, if the luminance G1 of the first virtual image V1 is high in a situation where the surroundings are dark, the background except for the first virtual image V1 in the first area A1 is illuminated, which may cause a hindrance to driving or the like. In the above configuration, when the light control value I2 is equal to or less than the set value A, setting the luminance G1 to be the same as the luminance G2 allows preventing the background from being visually recognized in the situation where the surroundings are dark.

(3) The HUD control unit 190 performs a light control value determination process for determining the light control value I2 based on the intensity of the external light detected by the external light detector 113, and a luminance determination process for determining the luminance G2 of the second virtual image V2 based on the determined light control value 12, and determining the luminance G1 of the first virtual image V1 by adding the luminance difference X to the determined luminance G2 of the second virtual image V2.
According to this configuration, the luminance G2 of the second virtual image V2 is determined based on the light control value 12, and the luminance G1 of the first virtual image V1 is determined on the basis of the luminance G2. Therefore, by using the light control value I2 for a display device such as the in-vehicle monitor 220 and the meter device 210, the luminance G2 of the second virtual image V2 and the light emission luminances G3 and G4 of the in-vehicle monitor 220 and the meter device 210 can be synchronized with one another. In this case, although the luminance G1 of the first virtual image V1 changes differently from the other luminances G2, G3 and G4, the display position and the display content of the first virtual image V1 are different from those of the meter device 210, the in-vehicle monitor 220 and the second virtual image V2, and therefore, the driver E does not feel an uncomfortable feeling.

(4) The onboard display system 1 includes the HUD device 100 and the meter device 210 and the in-vehicle monitor 220 that emit light at the light emission luminances G3 and G4 which are set. The meter device 210 and the in-vehicle monitor 220 change the light emission luminances G3 and G4 in synchronization with the change in the luminance G2 of the second virtual image V2.
According to this configuration, it is possible to realize a light emission mode giving a sense of unity without providing an uncomfortable feeling as the onboard display system 1 while improving the visual appeal of the first virtual image V1.

### (Modified Example)

The above embodiment can be implemented in the following forms which are modified as appropriate.

In the above embodiment, the light control value I2 is determined based on the acquired detection value I1, but the method of determining the light control value I2 is not limited to this. For example, the HUD device 100 may include an operation unit operated by a user. The operating unit is, for example, an operating knob which is rotated and operated. As shown in Fig. 2, the HUD control unit 190 may determine a reference value C based on the acquired detection value I1, and may set as the light control value I2 a value obtained by shifting the reference value C by an offset amount D based on an operation signal from the operating unit.

In the above embodiment, the meter device 210 and the in-vehicle monitor 220 have the light emission luminances G3 and G4 which have the same value as that of the luminance G2 of the second virtual image V2, but the light emission luminances G3 and G4 may not be the same value as that of the luminance G2, as long as the change in the light emission luminances G3 and G4 matches the change in the luminance G2 of the second virtual image V2. Matching the change means that the gamma value indicating the change in the light emission luminances G3 and G4 with respect to the light control value I2 is equal to the gamma value of the luminance G2 of the second virtual image V2. Thus, if the gamma values are approximately equal, then the luminance G2 of the second virtual image V2 based on the light control value I2 may be set to be higher than the luminances G3 and G4 of the meter device 210 and the in-vehicle monitor 220. It is noted that the difference between the gamma value indicating the change in the light emission luminances G3 and G4 with respect to the light control value I2 and the gamma value of the luminance G2 of the second virtual image V2 may be less than 0.1.

In the above embodiment, the onboard display system 1 includes the HUD device 100, the meter device 210 and the in-vehicle monitor 220, but at least one of the meter device 210 and the in-vehicle monitor 220 may be omitted.

In the above embodiment, the first display area A1 in which the first virtual image V1 is displayed extends in a substantially horizontal direction along the road surface, and the second display area A2 in which the second virtual image V2 is displayed extends perpendicularly to the road surface. However, the first display area A1 may also extend perpendicularly to the road surface.

In the above embodiment, although the HUD device 100 includes a single indicator 120, an indicator for displaying a display image corresponding to the first virtual image V1 and an indicator for displaying a display image corresponding to the second virtual image V2 may be separately provided. In other words, the HUD device 100 may include a plurality of indicators 120.

In the above embodiment, the meter device 210 and the in-vehicle monitor 220 receive the light control value I2 determined by the light control unit 192 and emit light at the light emission luminances G3 and G4 according to the light control value 12. However, the meter device 210 and the in-vehicle monitor 220 may determine the light control value I2 by themselves. In this case, the HUD device 100, the meter device 210 and the in-vehicle monitor 220 may share a single external light detector 113, and may determine the light control value I2 based on the detection value I1 from the external light detector 113. The HUD device 100, the meter device 210 and the in-vehicle monitor 220 may also determine respective light control values based on respective detected values from different external light detectors.

In the above embodiment, the external light detector 113 constitutes a part of the HUD device 100, but may be mounted separately from the HUD device 100. In the above embodiment, the external light detector 113 is formed of a photodiode, but the present invention is not limited thereto as long as the intensity of the external light can be detected, and the external light detector 113 may be, for example, a camera for capturing an actual scene. In this case, the light control value I2 is determined by analyzing the image captured by the camera (the external light detector 113), by an image analysis unit (the light control value determination unit 192a) provided on the vehicle or the camera itself, for example.

In the above embodiment, the light emission intensities of the light sources 121a and 121b are independently adjusted to adjust the luminance difference X between the luminance G1 of the first virtual image V1 and the luminance G2 of the second virtual image V2, but the luminance difference X between the luminance G1 and the luminance G2 may be adjusted by adjusting the gray scale of the indicator 120. Specifically, the indicator 120 may correct the gray scale of the display image corresponding to the first virtual image V1 or/and the gray scale of the display image corresponding to the second virtual image V2 so that the luminance difference X increases as the light control value I2 increases.

### DESCRIPTION OF REFERENCE NUMERALS

- 1: onboard display system
- 100: HUD device (head-up display device)
- 113: external light detector
- 120: indicator
- 121a, 121b: light source
- 122: display element
- 130: fold mirror
- 140: imaging position adjustment mirror
- 150: first screen
- 160: second screen
- 170: plane mirror
- 180: concave mirror
- 190: HUD control unit
- 210: meter device
- 220: in-vehicle monitor

## Claims

1. A head-up display device for displaying a first virtual image (V1) associated with an actual scene and a second virtual image (V2) not associated with the actual scene, the head-up display device comprising:
a control unit (190) configured to set a luminance (G1) of the first virtual image (V1) higher than a luminance (G2) of the second virtual image (V2) by a luminance difference (X), set the luminance (G1) of the first virtual image (V1) and the luminance (G2) of the second virtual image (V2) to gradually increase as a light control value (12) determined based on an intensity of external light increases, and set the luminance difference (X) to increase as a light control value (12) determined based on an intensity of external light increases.

2. The head-up display device of claim 1, wherein, when the light control value (12) is equal to or less than a set value, the control unit (190) sets the luminance difference (X) to zero to set the luminance (G1) of the first virtual image and the luminance (G2) of the second virtual image to be identical to each other.

3. The head-up display device of claim 1 or 2,
wherein the control unit performs:
a light control value determination process for determining the light control value (12) based on the intensity of the external light detected by an external light detector; and
a luminance determination process for determining the luminance (G2) of the second virtual image based on the determined light control value (12), and determining the luminance (G1) of the first virtual image by adding the luminance difference (X) to the determined luminance (G2) of the second virtual image.

4. An onboard display system comprising:
the head-up display device according to any one of claims 1 to 3; and
a display device (120) configured to emit light at a set light emission luminance,
wherein the display device (120) changes the light emission luminance according to a change (G2) in the luminance of the second virtual image (V2)

## Patentansprüche

1. Head-Up-Anzeigevorrichtung zum Anzeigen eines mit einer tatsächlichen Szene assoziierten ersten virtuellen Bilds (V1) und eines nicht mit der tatsächlichen Szene assoziierten zweiten virtuellen Bilds (V2), wobei die Head-Up-Anzeigevorrichtung umfasst:
eine Steuereinheit (190), die ausgelegt ist zum Setzen einer Luminanz (G1) des ersten virtuellen Bilds (V1) höher als eine Luminanz (G2) des zweiten virtuellen Bilds (V2) durch eine Luminanzdifferenz (X), Setzen der Luminanz (G1) des ersten virtuellen Bilds (V1) und der Luminanz (G2) des zweiten virtuellen Bilds (V2) zum allmählichen Erhöhen, während ein auf Basis einer Intensität von externem Licht bestimmter Lichtsteuerwert (I2) zunimmt, und Setzen der Luminanzdifferenz (X), um zu erhöhen, während ein auf Basis einer Intensität von externem Licht bestimmter Lichtsteuerwert (I2) zunimmt.

2. Head-Up-Anzeigevorrichtung nach Anspruch 1, wobei, wenn der Lichtsteuerwert (I2) gleich oder kleiner als ein eingestellter Wert ist, die Steuereinheit (190) die Luminanzdifferenz (X) auf null setzt, um die Luminanz (G1) des ersten virtuellen Bilds und die Luminanz (G2) des zweiten virtuellen Bilds so zu setzen, dass sie zueinander identisch sind.

3. Head-Up-Anzeigevorrichtung nach Anspruch 1 oder 2,
wobei die Steuereinheit durchführt:
einen Lichtsteuerwert-Bestimmungsprozess zum Bestimmen des Lichtsteuerwerts (I2) auf Basis der Intensität des durch einen Detektor für externes Licht detektierten externen Lichts; und
einen Luminanzbestimmungsprozess zum Bestimmen der Luminanz (G2) des zweiten virtuellen Bilds auf Basis des bestimmten Lichtsteuerwerts (I2) und Bestimmen der Luminanz (G1) des ersten virtuellen Bilds durch Addieren der Luminanzdifferenz (X) zu der bestimmten Luminanz (G2) des zweiten virtuellen Bilds.

4. Board-Anzeigesystem, umfassend:
die Head-Up-Anzeigevorrichtung nach einem der Ansprüche 1 bis 3; und
eine Anzeigevorrichtung (120), die ausgelegt ist zum Emittieren von Licht mit einer eingestellten Lichtemissionsluminanz,
wobei die Anzeigevorrichtung (120) die Lichtemissionsluminanz gemäß einer Änderung (G2) bei der Luminanz des zweiten virtuellen Bilds (V2) ändert.

## Revendications

1. Dispositif d'affichage tête haute pour afficher une première image virtuelle (V1) associée à une scène réelle et une seconde image virtuelle (V2) non associée à la scène réelle, le dispositif d'affichage tête haute comprenant :
une unité de commande (190) configurée pour régler une luminance (G1) de la première image virtuelle (V1) à un niveau supérieur à une luminance (G2) de la seconde image virtuelle (V2) d'une différence de luminance (X), régler la luminance (G1) de la première image virtuelle (V1) et la luminance (G2) de la seconde image virtuelle (V2) pour qu'elles augmentent progressivement lorsqu'une valeur de commande de lumière (I2) déterminée sur la base d'une intensité de lumière externe augmente, et régler la différence de luminance (X) pour qu'elle augmente lorsqu'une valeur de commande de lumière (I2) déterminée sur la base d'une intensité de lumière externe augmente.

2. Dispositif d'affichage tête haute selon la revendication 1, dans lequel, lorsque la valeur de commande de lumière (I2) est égale ou inférieure à une valeur définie, l'unité de commande (190) règle la différence de luminance (X) à zéro pour définir la luminance (G1) de la première image virtuelle et la luminance (G2) de la seconde image virtuelle à des valeurs identiques l'une à l'autre.

3. Dispositif d'affichage tête haute selon la revendication 1 ou la revendication 2,
dans lequel l'unité de commande exécute :
un processus de détermination de valeur de commande de lumière pour déterminer la valeur de commande de lumière (I2) sur la base de l'intensité de la lumière externe détectée par un détecteur de lumière externe ; et
un processus de détermination de luminance pour déterminer la luminance (G2) de la seconde image virtuelle sur la base de la valeur de commande de lumière déterminée (I2), et déterminer la luminance (G1) de la première image virtuelle en ajoutant la différence de luminance (X) à la luminance déterminée (G2) de la seconde image virtuelle.

4. Système d'affichage embarqué comprenant :
le dispositif d'affichage tête haute selon l'une quelconque des revendications 1 à 3 ; et
un dispositif d'affichage (120) configuré pour émettre de la lumière à une luminance d'émission de lumière définie,
où le dispositif d'affichage (120) modifie la luminance d'émission de lumière en fonction d'une modification (G2) de la luminance de la seconde image virtuelle (V2).
